# FASCICULE DE BREVET EUROPEEN

(11) **EP 3 888 883 B1**
(45) Date de publication et mention de la délivrance du brevet: **15.02.2023**
(21) Numéro de dépôt: 21165467.8
(22) Date de dépôt: 29.03.2021
(51) Int. Cl.: B29C 49/42, B29C 49/06, B29C 49/64, B29K 67/00, B29L 31/00

(54) **DISPOSITIF DE PREHENSION DE PREFORMES POUR UNITE DE CHAUFFE**
VORRICHTUNG ZUM GREIFEN VON VORFORMLINGEN FÜR EINE HEIZEINHEIT
DEVICE FOR GRIPPING PREFORMS FOR HEATING UNIT

(30) Priorité: 01.04.2020 FR 2003248
(43) Date de publication de la demande: 06.10.2021
(73) Titulaire: Sidel Participations, 76930 Octeville-sur-Mer (FR)
(72) Inventeur: MICHEL, Jocelyn, 76930 Octeville-sur-mer (FR); FEVRE, Sébastien, 76930 Octeville-sur-mer (FR)
(74) Mandataire: Sidel Group

(56) Documents cités:
- EP-A1- 3 228 438
- DE-A1-102014 017 546
- DE-A1-102017 124 186
- US-B2- 8 992 208

## Description

Le domaine de l'invention est celui de la conception et de la fabrication de récipients en matière plastique.

Plus précisément, l'invention concerne les unités de chauffe de préformes en matière plastique, en vue de leur déformation pour l'obtention d'un récipient final.

Encore plus précisément, l'invention concerne un dispositif de préhension de préformes d'une unité de chauffe.

Par préformes il est à la fois entendu les ébauches obtenues par moulage ou les récipients intermédiaires formés à partir d'ébauches ayant subies au moins une étape de déformation mais n'ayant pas la forme finale du récipient.

Un récipient en matière plastique est classiquement formé par soufflage ou étirage soufflage à partir d'une préforme qui comprend un corps sensiblement cylindrique fermé par un fond hémisphérique et, à l'opposé, un col ouvert présentant sa forme finale et séparé du corps par une collerette.

Pour permettre le formage du récipient, on soumet le corps et le fond de la préforme à une chauffe pour les ramollir en les amenant à une température (dite température de chauffe) supérieure à la température de transition vitreuse de la matière.

Dans le cas du PET, qui possède une température de transition vitreuse de 80°C environ, la température de chauffe est généralement de 120°C environ.

La chauffe de la préforme est ordinairement réalisée dans une unité de chauffe équipée de sources lumineuses (généralement des lampes halogène ou des diodes laser).

Pour cela, la préforme est montée sur un support tournant appelé « tournette », qui comprend un arbre pourvu à une extrémité d'un mandrin coopérant avec le col, et, à une autre extrémité, d'un pignon engrenant une crémaillère. La tournette fait défiler la préforme devant les sources lumineuses, tout en l'entraînant en rotation pour exposer la totalité du corps au rayonnement lumineux des sources lumineuses.

Lors de la chauffe, il est nécessaire de limiter, voire empêcher, que les cols des préformes ne chauffent, ce qui pourrait conduire à leur déformation.

En effet, les cols qui présentent leur forme finale n'ont pas vocation à être déformés.

La déformation des cols pourrait rendre impropre à la mise dans le commerce les récipients, notamment par l'impossibilité de mettre en place des bouchons pour fermer les récipients une fois remplis.

Pour éviter la chauffe des cols, des mandrins ont été développés pour permettre une prise des cols par l'extérieur au moyen d'une bague.

Ces mandrins ne permettent pas une protection optimale des cols, notamment car le rayonnement lumineux émis par les sources lumineuses est réfléchi contre les parois de la préforme, à l'intérieur de celle-ci, jusqu'à atteindre le col et le chauffer.

Des embouts prenant place à l'intérieur des bagues, et donc des cols, ont alors été intégrés aux mandrins de sorte à réfléchir le rayonnement lumineux dirigé vers le col.

Les embouts ménagent donc, avec les bagues, un espace annulaire restreint dans lequel est destiné à être logé le col des préformes.

Cela implique donc un réglage très précis du positionnement des préformes lors de leur entrée dans l'unité de chauffe, préalablement à leur préhension par les mandrins.

D'autres mandrins assurent la préhension des préformes par l'intérieur des cols au moyen uniquement d'un embout.

Cela permet notamment de limiter le risque d'endommagement des cols des préformes même si le réglage précis de la position des préformes pour leur préhension par les mandrins est toujours nécessaire.

Bien qu'ils soient protégés du rayonnement lumineux direct lors de la chauffe des préformes, les mandrins, et notamment les embouts, s'échauffent par leur défilement dans des zones de fortes températures de l'unité de chauffe, c'est-à-dire à proximité des sources lumineuses.

Il est donc nécessaire de refroidir les mandrins pour éviter que leur seule chaleur ne permette de déformer les cols des préformes.

A cet effet, tel que cela est décrit dans le document de brevet publié sous le numéro EP3 228 438, les mandrins comprennent des radiateurs permettant de dissiper les calories par circulation d'air. De tels dispositifs sont notamment décrits dans les documents DE102014017546, DE102017124186 et US8992208.

Plus précisément, le radiateur est solidaire de l'arbre et destiné à venir au contact de l'embout pour permettre une dissipation des calories par conduction thermique.

Lors de la préhension et du déchargement des préformes, les mandrins sont éloignés des zones de forte température de l'unité de chauffe, ce qui permet d'en réaliser leur refroidissement via les radiateurs.

Toutefois, l'augmentation continuelle des cadences de production tend à diminuer le temps de refroidissement des mandrins puisque la préhension et le déchargement des préformes est de plus en plus rapide.

Ainsi, les mandrins continuent de s'échauffer mais ne peuvent pas se refroidir autant que nécessaire, ce qui peut entrainer un risque de déformation des cols des préformes.

L'invention a notamment pour objectif de palier les inconvénients de l'art antérieur.

Plus précisément, l'invention a pour objectif de proposer une solution qui permette la préhension des préformes de manière fiable tout en évitant de chauffer le col des préformes.

L'invention a également pour objectif de fournir une telle solution qui soit simple d'utilisation et de maintenance.

Ces objectifs, ainsi que d'autres qui apparaîtront par la suite, sont atteints grâce à l'invention qui a pour objet un dispositif de préhension de préforme pour unité de chauffe, comprenant :
- un mandrin définissant un axe de rotation des préformes ;
- un embout monté à une première extrémité du mandrin et présentant une partie pénétrante dans le col des préformes ;
- des moyens de contact par friction avec la préforme, solidaire de l'embout,
- un radiateur solidaire du mandrin et destiné à venir au contact de l'embout, caractérisé en ce que l'embout comprend également une partie de refroidissement dans le prolongement axial de la partie pénétrante, la partie de refroidissement présentant au moins un relief d'échange thermique au contact d'un air ambiant, et en ce que l'embout est monté mobile sur le mandrin.

La partie de refroidissement permet un refroidissement de l'embout par contact avec l'air ambiant et/ou un air de ventilation forcée.

En effet, lorsque les préformes sont en regard des sources lumineuses pour être chauffées, le rayonnement lumineux échauffe l'embout, qu'il est alors nécessaire de refroidir.

Lorsque les préformes sont déchargées, et préalablement à la prise en charge d'une nouvelle préforme via l'embout, l'air dans lequel évoluent les dispositifs de préhension est alors assez froid pour permettre un refroidissement de l'embout par circulation le long de la partie de refroidissement de l'embout.

Par ailleurs, la mobilité de l'embout sur le mandrin permet de pouvoir assurer une préhension souple des préformes sans exercer d'effort trop important sur la roue maintenant les préformes préalablement à leur prise en charge par les dispositifs de préhension.

En outre, cette mobilité permet de pouvoir mettre en contact l'embout avec le radiateur pour permettre également un refroidissement par conduction entre l'embout et le radiateur.

La présence de la partie de refroidissement permet que l'embout soit à une température d'utilisation basse au démarrage du cycle de chauffe, cela malgré une phase de montée en température du four. Durant cette phase de montée en température, les embouts, bien que protégés, peuvent monter en température par convection avec la température régnant dans le four. En d'autres termes, en production, l'embout avec la partie de refroidissement permet de maintenir une température de fonctionnement plus basse que s'il n'y avait pas de partie de refroidissement sur l'embout.

Préférentiellement, la partie de refroidissement comprend au moins deux reliefs espacés axialement l'un de l'autre.

Cela permet notamment d'accroître les échanges thermiques entre l'embout et l'air ambiant, dans le but d'offrir un meilleur refroidissement de l'embout.

Avantageusement, le ou chaque relief est formé d'une ailette annulaire ou en portion annulaire qui s'étend radialement autour du mandrin.

Une ailette présente ainsi trois faces destinées à venir au contact de l'air ambiant, cela afin d'augmenter les échanges thermiques et donc le refroidissement de l'embout.

De préférence, l'un au moins des reliefs de la partie de refroidissement présente une dimension hors-tout supérieure à une dimension hors-tout de la partie pénétrante.

Ainsi, le relief présentant une dimension hors-tout supérieure à la dimension hors-tout de la partie pénétrante permet de former une butée d'enfoncement de la partie pénétrante dans le col des préformes.

Selon un mode de réalisation préféré, la partie pénétrante et la partie de refroidissement de l'embout forment un ensemble monobloc.

Cela permet de réaliser un montage et un démontage faciles de l'embout sur l'arbre mais également de favoriser le refroidissement de la partie pénétrante par la partie de refroidissement.

De préférence, l'embout comprend au moins deux secteurs angulaires pour chacun desquels la partie pénétrante et la partie de refroidissement de l'embout sont venues de matières l'une avec l'autre.

Cela permet notamment d'obtenir un embout par moulage, ou à tout le moins des secteurs de l'embout obtenus par moulage, ce qui offre une fabrication aisée et peu coûteuse.

Par ailleurs, cela permet de limiter le nombre de pièces de l'embout et donc d'en faciliter à la fois son montage et sa maintenance.

Selon un autre mode de réalisation avantageux, la partie pénétrante et la partie de refroidissement de l'embout sont venues de matières l'une avec l'autre.

Ainsi, il est possible d'obtenir un embout d'un seul tenant pouvant être obtenu par moulage. Cela facilite donc à la fois la fabrication, mais également l'utilisation de l'embout, et donc du dispositif de préhension. De plus cela facilite le transfert des calories depuis la partie pénétrante vers la partie réfléchissante.

Avantageusement, les moyens de contact par friction sont intégrés à la partie pénétrante et se présentent sous la forme d'au moins une saillie radiale.

Cela limite encore le nombre de pièces composant l'embout, au bénéfice de sa fabrication, de son coût, et de sa facilité d'utilisation.

Préférentiellement, le mandrin présente une surface pleine réfléchissante à sa première extrémité, destinée à former des moyens de réflexion d'un rayonnement lumineux de source lumineuse d'une unité de chauffe.

Cette surface pleine réfléchissante permet donc d'éviter que le rayonnement lumineux émis par les sources lumineuses ne chauffe l'embout des moyens de préhension, ce qui évite un refroidissement trop important à fournir aux moyens de préhension et notamment à l'embout.

Selon une autre forme de réalisation, le mandrin présente, à sa première extrémité, un épaulement destiné à former une butée en translation de l'embout sur le mandrin.

Le débattement de l'embout sur le mandrin est alors limité entre l'épaulement et le radiateur, de sorte à autoriser une préhension douce des préformes, tout en assurant un refroidissement optimal de l'embout par la venue de ce dernier en butée sur le radiateur.

Avantageusement, l'épaulement du mandrin présente une rainure annulaire dans laquelle est reçu un bourrelet annulaire porté par la partie pénétrante de l'embout.

La coopération du bourrelet avec la rainure annulaire permet de centrer l'embout sur le mandrin et de guider le déplacement en translation de l'embout sur le mandrin.

L'invention concerne également une unité de chauffe de préformes comprenant au moins un dispositif de préhension de préformes tel que décrit précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig.1] est une vue schématique en coupe transversale d'un dispositif de préhension de préformes selon l'art antérieur ;
[Fig.2] est une vue en perspective d'un dispositif de préhension de préformes selon l'invention ;
[Fig.3] est une vue en coupe transversale du dispositif de préhension de préformes selon l'invention ;
[Fig.4] est une vue en perspective de dessous d'un embout de dispositif de préhension de préformes selon l'invention, selon une première forme de réalisation ;
[Fig.5] est une vue en perspective de dessous d'un embout du dispositif de préhension de préforme selon l'invention, selon une deuxième forme de réalisation.

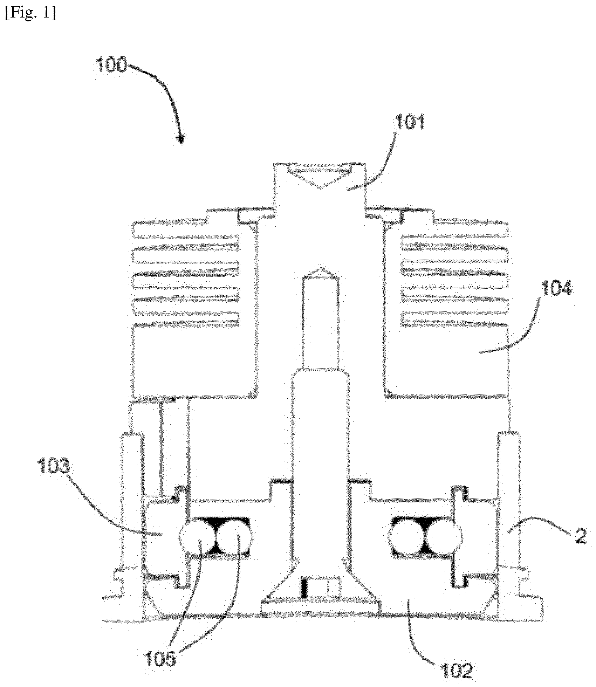

Tel qu'illustré sur la figure 1, un dispositif 100 de préhension de préforme 2 selon l'art antérieur comprend un mandrin 101, un support 102 monté à une première extrémité du mandrin 101, des moyens de contact 103 par friction avec une préforme 2 solidaire du support 102 et un radiateur 104 solidaire du mandrin 101.

Plus particulièrement, les moyens de contact 103 par friction sont formés d'une bague montée entre le mandrin 101 d'une part et le support 102 d'autre part.

La bague comprend plusieurs secteurs angulaires.

Chaque secteur angulaire est monté entre le mandrin 101 et l'embout 102 de manière à venir compresser radialement des joints 105 toriques permettant d'écarter radialement vers l'extérieur les secteurs de la bague pour forcer le contact par friction de la bague avec l'intérieur d'un col des préformes 2.

En fonctionnement, le dispositif 100 de préhension est monté à force dans le col des préformes 2.

Plus précisément, le support 102 est inséré dans le col des préformes 2, de sorte que les moyens de contact 103 par friction soient repoussés radialement vers le mandrin 101 et que les joints toriques 105, par réaction, repoussent les secteurs de la bague contre le col de la préforme 2 pour la maintenir par friction.

Un tel fonctionnement engendre ainsi des efforts importants du dispositif 100 de préhension sur les préformes 2 lors de la préhension et du relâchement des préformes 2.

En outre, le support 102, lors de la chauffe des préformes 2, monte en température et ne peut être refroidi que par son contact avec le radiateur 104 du dispositif 100 de préhension.

Aussi, au fur et à mesure des cycles, le support 102 monte en température, ce qui empêche son bon refroidissement, et peut, à terme, engendrer des dégâts sur la préforme 2, et plus particulièrement une déformation du col de la préforme 2 qui peut empêcher la mise en place d'un bouchon sur le récipient formé. En outre, un mauvais refroidissement pourrait engendrer des dégâts sur la machine de fabrication des récipients, par exemple lié à un mauvais dévêtissage des préformes en sortie de chauffe.

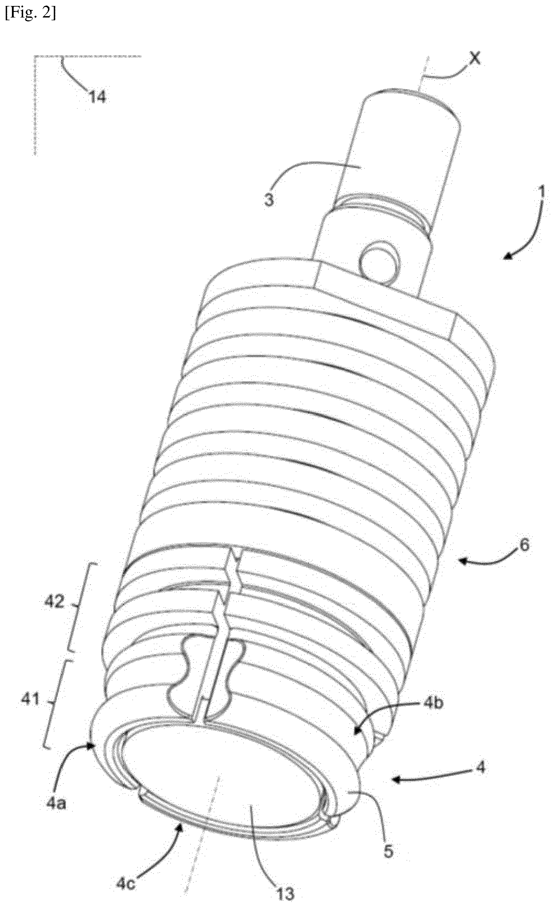

En référence aux figures 2 à 5, un dispositif 1 de préhension de préformes 2, selon l'invention, est décrit.

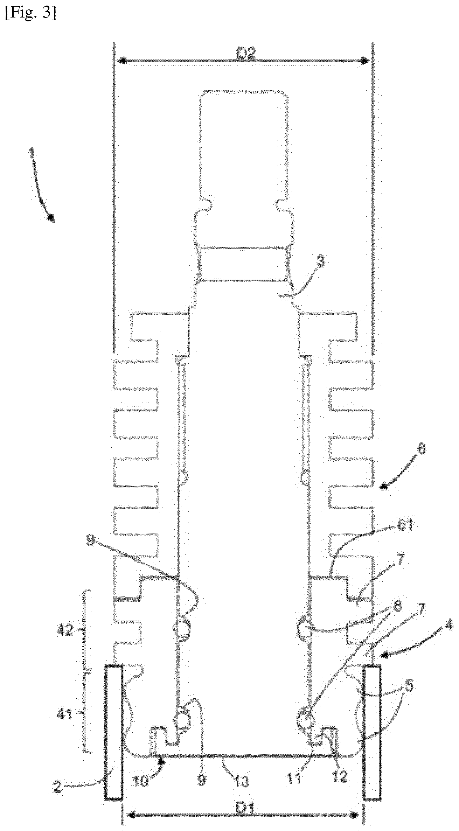

Tel qu'illustré sur les figures 2 et 3, le dispositif 1 de préhension de préformes 2, selon l'invention comprend :
- un mandrin 3 définissant un axe X de rotation des préformes 2 ;
- un embout 4 monté à une première extrémité du mandrin 3 et présentant une partie pénétrante 41 dans le col des préformes 2 ;
- des moyens de contact 5 par friction avec la préforme 2, solidaire de l'embout 4 ;
- un radiateur 6 solidaire du mandrin 3 et destiné à venir au contact de l'embout 4.

Le dispositif 1 de préhension selon l'invention diffère de celui de l'art antérieur en ce que l'embout 4 comprend également une partie de refroidissement 42 prolongeant axialement la partie pénétrante 41.

Plus précisément, tel que cela est visible sur les figures 2, 3, 4 et 5, la partie de refroidissement 42 présente au moins un relief 7 d'échange thermique au contact d'un air ambiant.

Selon le présent mode de réalisation, la partie de refroidissement comprend au moins deux reliefs 7 espacés axialement l'un de l'autre.

Le, ou chaque relief 7, est formé d'une ailette annulaire, ou quasiment annulaire, ou en arc de cercle qui s'étend radialement autour du mandrin 3.

Tel que cela est illustré par la figure 3, l'un au moins des reliefs 7 de la partie de refroidissement 42 présente une dimension hors-tout supérieure à une dimension hors-tout de la partie pénétrante 41.

Plus précisément, la partie pénétrante 41 de l'embout 4 présente un premier diamètre D1 inférieur au diamètre D2 de l'un au moins des reliefs 7 de la partie de refroidissement 42.

Cela permet, premièrement, de pouvoir assurer le refroidissement de l'embout 4 et, deuxièmement, de former une butée en enfoncement de la partie pénétrante 41 dans le col des préformes 2.

En référence aux figures 2, 3, 4 et 5, l'embout 4 présente deux reliefs 7 espacés axialement l'un de l'autre, chaque relief 7 présentant un diamètre D2 identique à l'autre.

Ainsi, les deux reliefs 7 présentent un diamètre hors-tout supérieur au diamètre hors-tout de la partie pénétrante 41, ce qui permet d'augmenter la surface de refroidissement de l'embout 4 au contact de l'air.

Tel qu'illustré sur la figure 3, l'embout 4 est monté sur le mandrin 3 via une paire de joints toriques 8. Les joints toriques 8 sont en l'espèce des éléments élastiquement déformables.

Plus particulièrement, le mandrin 3 présente, au niveau de sa première extrémité, deux gorges 9 annulaires espacées axialement l'une de l'autre à l'intérieur desquelles sont partiellement reçus des joints toriques 8.

Plus précisément, un joint torique 8 est reçu partiellement dans chacune des gorges 9 annulaires.

Cela permet, comme il sera décrit ci-après, de favoriser le maintien par friction des préformes 2 sur l'embout 4, mais également de centrer et de maintenir en position l'embout 4 sur le mandrin 3.

Par ailleurs, tel qu'illustré sur la figure 3, à sa première extrémité, le mandrin 3 présente un épaulement 10 destiné à former une butée en translation de l'embout 4 sur le mandrin 3.

Plus particulièrement, l'épaulement 10 du mandrin 3 présente une rainure 11 annulaire dans laquelle est reçu un bourrelet 12 annulaire porté par la partie pénétrante 41 de l'embout 4.

La coopération entre le bourrelet 12 annulaire et la rainure 11 annulaire permet, en complément de l'action des joints toriques 8, de maintenir centré l'embout 4 sur le mandrin 3, notamment lors de sa rotation, mais également de guider en translation l'embout 4 sur le mandrin 3.

Les moyens de contact 5 par friction, tel qu'illustré sur les figures 2, 3, 4 et 5, sont intégrés à la partie pénétrante 41 de l'embout 4 et se présentent sous la forme d'au moins une saillie radiale.

Plus particulièrement, les moyens de contact 5 par friction se présentent sous la forme de deux saillies radiales espacées axialement l'une de l'autre et formant toutes les deux un ensemble de vagues.

Tel que cela est illustré sur la vue en coupe de la figure 3, chaque saillie radiale des moyens de contact 5 par friction présente un diamètre identique.

Toutefois, l'une des saillies radiales pourrait présenter un diamètre inférieur à l'autre. De préférence, la saillie radiale la plus éloignée du radiateur 6 présente un diamètre inférieur à la saillie radiale la plus proche du radiateur 6.

Tel que cela est visible sur les figures 2 et 3, le mandrin 3 présente, à sa première extrémité, une surface pleine 13 réfléchissante destinée à former des moyens de réflexion d'un rayonnement lumineux de source lumineuse d'une unité de chauffe 14.

La surface pleine 13 réfléchissante permet ainsi d'éviter un échauffement du mandrin 3 et de l'embout 4 par le rayonnement lumineux émis par les sources de rayonnement lumineux de l'unité de chauffe 14.

Ainsi, grâce à la présence de cette surface pleine 13 réfléchissante, le refroidissement de l'embout 4 ne nécessite pas d'être intense.

Dès lors, en fonctionnement, malgré un temps de présence hors de l'unité de chauffe 14 réduit, notamment en conséquence de l'augmentation des cadences de production, la simple présence des reliefs 7, sous forme d'ailettes, de la partie de refroidissement 42 permet que, au contact de l'air ambiant, l'embout 4 soit convenablement refroidi pour éviter tout endommagement des préformes 2.

Les reliefs 7, sous forme, d'ailettes permettent le refroidissement de l'embout 4 lors de la chauffe, grâce à un air forcé, notamment par ventilation.

Préférentiellement, la partie de refroidissement 42 et la partie pénétrante 41 de l'embout 4 forment un ensemble monobloc.

Autrement dit, la partie pénétrante 41 et la partie de refroidissement 42 de l'embout 4 peuvent être fabriquées indépendamment l'une de l'autre mais sont assemblées de manière définitive en vue d'être utilisées sur le dispositif 1 de préhension.

Plus particulièrement, l'embout 4 du dispositif 1 de préhension selon l'invention est réalisé en acier inoxydable ou en aluminium spécifique, notamment pour des raisons de contact avec un récipient destiné à contenir un produit alimentaire.

Ainsi, l'assemblage de la partie pénétrante 41 avec la partie de refroidissement 42 de l'embout 4 peut être assuré par soudage par exemple.

Selon un mode de réalisation avantageux, la partie pénétrante 41 de l'embout 4 et la partie de refroidissement 42 sont venues de matières l'une avec l'autre.

Autrement dit, la partie pénétrante 41 et la partie de refroidissement 42 de l'embout 4 sont par exemple obtenues par moulage ou par usinage.

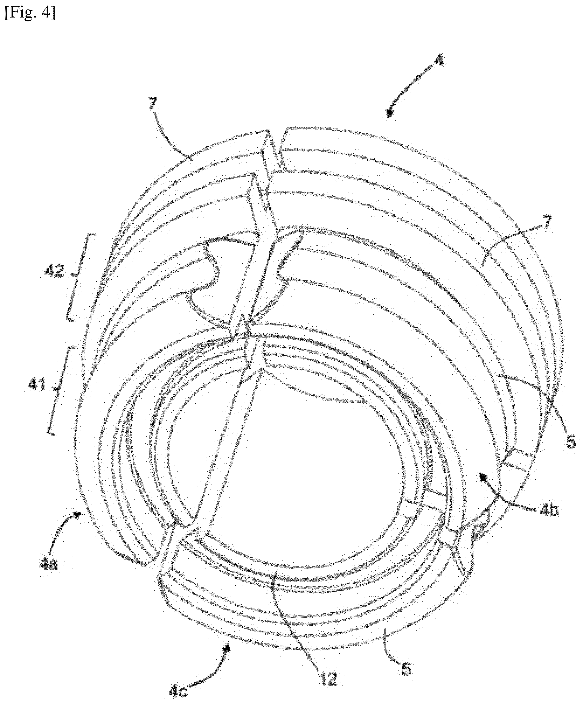

Selon une première forme de réalisation, tel qu'illustré sur la figure 4, l'embout 4 comprend au moins deux secteurs angulaires 4a, 4b.

Plus précisément, l'embout 4 comprend un premier secteur angulaire 4a, un deuxième secteur angulaire 4b et un troisième secteur angulaire 4c s'étendant chacun sur approximativement 120 degrés.

Les secteurs angulaires 4a, 4b, 4c sont maintenus sur le mandrin 3 par la coopération entre la rainure 11 annulaire et le bourrelet 12 annulaire d'une part, et par leur insertion dans un épaulement 61 ménagé dans le radiateur 6 d'autre part.

Le radiateur 6 est quant à lui fixe sur le mandrin 3, ce qui permet d'autoriser un déplacement de l'embout 4 entre l'épaulement 10 du mandrin 3 et le radiateur 6.

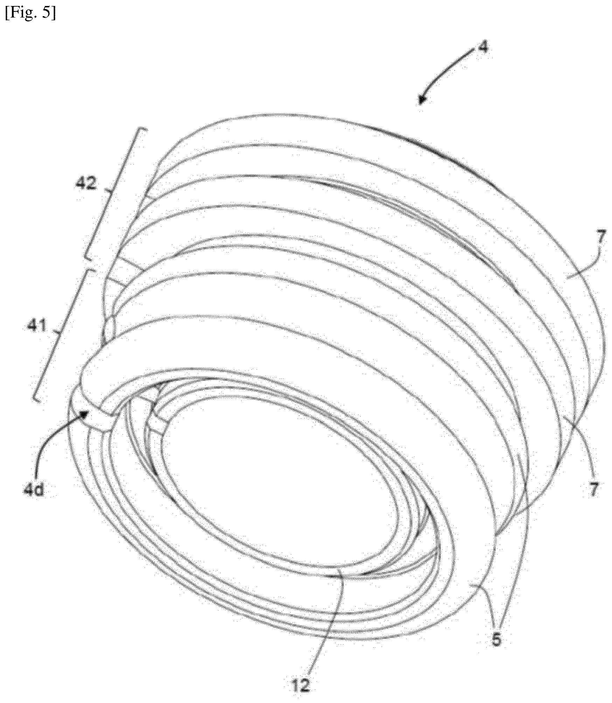

Selon une deuxième forme de réalisation illustrée sur la figure 5, l'embout 4 est formé d'un unique secteur angulaire présentant une fente 4d pour autoriser une déformation élastique de l'embout 4, notamment lors du vétissage et du dévétissage, c'est-à-dire lors de la préhension et du relâchement d'une préforme 2.

Le secteur angulaire unique est maintenu sur le mandrin 3 par la coopération entre la rainure 11 annulaire et le bourrelet 12 annulaire d'une part, et son insertion dans l'épaulement 61 ménagé dans le radiateur 6 d'autre part.

Le dispositif 1 de préhension qui vient d'être décrit, notamment la présence de la partie de refroidissement 42 permet d'assurer un refroidissement adéquat de l'embout 4 entre la chauffe de deux préformes 2, cela au bénéfice de l'intégrité du col des préformes.

En effet, la présente des reliefs 7 sur la partie de refroidissement 42 de l'embout 4 permet de faciliter les échanges thermiques entre l'embout 4 et l'air ambiant, et donc le refroidissement de l'embout 4.

## Revendications

1. Dispositif (1) de préhension de préformes (2) pour unité de chauffe (14), comprenant :
- un mandrin (3) définissant un axe (X) de rotation des préformes (2) ;
- un embout (4) monté à une première extrémité du mandrin (3) et présentant une partie pénétrante (41) dans le col des préformes (2) ;
- des moyens de contact (5) par friction avec la préforme (2), solidaires de l'embout (4),
- un radiateur (6) solidaire du mandrin (3) et destiné à venir au contact de l'embout (4), ledit radiateur (6) étant monté fixe sur le mandrin,
**caractérisé en ce que** l'embout (4) comprend également une partie de refroidissement (42) dans le prolongement axial de la partie pénétrante (41), la partie de refroidissement (42) présentant au moins un relief (7) d'échange thermique au contact d'un air ambiant, et **en ce que** l'embout (4) comprenant la partie de refroidissement (42) est monté mobile sur le mandrin (3).

2. Dispositif (1) selon la revendication précédente, **caractérisé en ce que** la partie de refroidissement (42) comprend au moins deux reliefs (7) espacés axialement l'un de l'autre.

3. Dispositif (1) selon l'une quelconque des revendications précédentes, **caractérisé en ce que** le ou chaque relief (7) est formé d'une ailette annulaire qui s'étend radialement autour du mandrin (3).

4. Dispositif (1) selon la revendication précédente, **caractérisé en ce que** l'un au moins des reliefs (7) de la partie de refroidissement (42) présente une dimension hors tout supérieure à une dimension hors-tout de la partie pénétrante (41).

5. Dispositif selon l'une quelconque des revendications précédentes, **caractérisé en ce que** la partie pénétrante (41) et la partie de refroidissement (42) de l'embout (4) forment un ensemble monobloc.

6. Dispositif (1) selon l'une quelconque des revendications précédentes, **caractérisé en ce que** l'embout (4) comprend au moins deux secteurs angulaires pour chacun desquels la partie pénétrante (41) et la partie de refroidissement (42) de l'embout (4) sont venues de matière l'une avec l'autre.

7. Dispositif (1) selon l'une quelconque des revendications 1 à 5, **caractérisé en ce que** la patrie pénétrante (41) et la partie de refroidissement (42) de l'embout (4) sont venues de matière l'une avec l'autre.

8. Dispositif (1) selon l'une quelconque des revendications précédentes, **caractérisé en ce que** les moyens de contact (5) par friction sont intégrés à la partie pénétrante (41) et se présentent sous la forme d'au moins une saillie radiale.

9. Dispositif (1) selon l'une quelconque des revendications précédentes, **caractérisé en ce que** le mandrin (3) présente une surface pleine (13) réfléchissante à sa première extrémité, destinée à former des moyens de réflexion d'un rayonnement lumineux de sources lumineuses d'une unité de chauffe (14).

10. Dispositif (1) selon l'une quelconque des revendications précédentes, **caractérisé en ce que** le mandrin (3) présente, à sa première extrémité, un épaulement (10) destiné à former une butée en translation de l'embout (4) sur le mandrin (3).

11. Dispositif (1) selon la revendication précédente **caractérisé en ce que** l'épaulement (10) du mandrin (3) présente une rainure (11) annulaire dans laquelle est reçu un bourrelet (12) annulaire porté par la partie pénétrante (41) de l'embout (4).

12. Unité de chauffe (14) de préformes (2) comprenant au moins un dispositif (1) de préhension de préformes selon l'une quelconque des revendications précédentes.

## Patentansprüche

1. Vorrichtung (1) zum Greifen von Vorformlingen (2) für eine Einheit zum Erhitzen (14), die Folgendes aufweist:
- eine Drehspindel (3), die eine Rotationsachse (X) der Vorformlinge (2) definiert;
- ein Ansatzstück (4), das an einem ersten Ende der Drehspindel (3) angebracht ist und einen Eindringteil (41) in den Hals der Vorformlinge (2) aufweist;
- Kontaktmittel (5) durch Reibung mit dem Vorformling (2), die fest mit dem Ansatzstück (4) verbunden sind;
- einen Radiator (6), der fest mit der Drehspindel (3) verbunden ist und in Kontakt mit dem Ansatzstück (4) kommen soll, wobei der Radiator (6) fest auf der Drehspindel montiert ist,
**dadurch gekennzeichnet, dass** das Ansatzstück (4) darüber hinaus einen Kühlteil (42) in der axialen Verlängerung des Eindringteils (41) aufweist, wobei der Kühlteil (42) mindestens ein Relief (7) zum Wärmeaustausch in Kontakt mit Umgebungsluft aufweist, und dass das Ansatzstück (4), das den Kühlteil (42) aufweist, beweglich auf der Drehspindel (3) montiert ist.

2. Vorrichtung (1) nach dem vorhergehenden Anspruch, **dadurch gekennzeichnet, dass** der Kühlteil (42) mindestens zwei axial voneinander beabstandete Reliefs (7) aufweist.

3. Vorrichtung (1) nach einem der vorhergehenden Ansprüche, **dadurch gekennzeichnet, dass** das oder jedes Relief (7) aus einer ringförmigen Rippe gebildet wird, die sich radial um die Drehspindel (3) erstreckt.

4. Vorrichtung (1) nach dem vorhergehenden Anspruch, **dadurch gekennzeichnet, dass** mindestens eines der Reliefs (7) des Kühlteils (42) eine Gesamtabmessung hat, die größer ist als eine Gesamtabmessung des Eindringteils (41).

5. Vorrichtung nach einem der vorhergehenden Ansprüche, **dadurch gekennzeichnet, dass** der Eindringteil (41) und der Kühlteil (42) des Ansatzstücks (4) eine einstückige Einheit bilden.

6. Vorrichtung (1) nach einem der vorhergehenden Ansprüche, **dadurch gekennzeichnet, dass** das Ansatzstück (4) mindestens zwei Winkelsektoren aufweist, wobei für jeden von diesen der Eindringteil (41) und der Kühlteil (42) des Ansatzstücks (4) miteinander einstückig sind.

7. Vorrichtung (1) nach einem der Ansprüche 1 bis 5, **dadurch gekennzeichnet, dass** der Eindringteil (41) und der Kühlteil (42) des Ansatzstücks (4) miteinander einstückig sind.

8. Vorrichtung (1) nach einem der vorhergehenden Ansprüche, **dadurch gekennzeichnet, dass** die Kontaktmittel (5) durch Reibung in den Eindringteil (41) integriert sind und die Form von mindestens einem radialen Vorsprung haben.

9. Vorrichtung (1) nach einem der vorhergehenden Ansprüche, **dadurch gekennzeichnet, dass** die Drehspindel (3) an ihrem ersten Ende eine volle reflektierende Oberfläche (13) aufweist, die dazu bestimmt ist, Mittel zum Reflektieren einer Lichtstrahlung von Lichtquellen einer Einheit zum Erhitzen (14) zu bilden.

10. Vorrichtung (1) nach einem der vorhergehenden Ansprüche, **dadurch gekennzeichnet, dass** die Drehspindel (3) an ihrem ersten Ende einen Vorsprung (10) aufweist, der dazu bestimmt ist, einen Anschlag bei der Translation des Ansatzstücks (4) auf der Drehspindel (3) zu bilden.

11. Vorrichtung (1) nach dem vorhergehenden Anspruch, **dadurch gekennzeichnet, dass** der Vorsprung (10) der Drehspindel (3) eine Ringnut (11) aufweist, in der ein Ringwulst (12) aufgenommen ist, der von dem Eindringteil (41) des Ansatzstücks (4) getragen wird.

12. Einheit zum Erhitzen (14) von Vorformlingen (2), die mindestens eine Vorrichtung (1) zum Greifen von Vorformlingen nach einem der vorhergehenden Ansprüche aufweist.

## Claims

1. Device (1) for gripping preforms (2) for a heating unit (14), comprising:
- a mandrel (3) defining an axis (X) of rotation of the preforms (2);
- an end piece (4) mounted at a first end of the mandrel (3) and having a part (41) penetrating into the neck of the preforms (2);
- means (5) for frictional contact with the preform (2), which are as one with the end piece (4),
- a heatsink (6) as one with the mandrel (3) and intended to come into contact with the end piece (4), said heatsink (6) being mounted fixedly on the mandrel, **characterized in that** the end piece (4) also comprises a cooling part (42) in the axial continuation of the penetrating part (41), the cooling part (42) having at least one relief (7) for heat exchange in contact with the ambient air, and **in that** the end piece (4) comprising the cooling part (42) is mounted so as to be able to move on the mandrel (3).

2. Device (1) according to the preceding claim, **characterized in that** the cooling part (42) comprises at least two reliefs (7) spaced axially apart from one another.

3. Device (1) according to either one of the preceding claims, **characterized in that** the or each relief (7) is formed of an annular flange that extends radially around the mandrel (3).

4. Device (1) according to the preceding claim, **characterized in that** at least one of the reliefs (7) of the cooling part (42) has an overall dimension greater than an overall dimension of the penetrating part (41).

5. Device according to any one of the preceding claims, **characterized in that** the penetrating part (41) and the cooling part (42) of the end piece (4) form a one-piece assembly.

6. Device (1) according to any one of the preceding claims, **characterized in that** the end piece (4) comprises at least two angular sectors in each of which the penetrating part (41) and the cooling part (42) of the end piece (4) are in one piece.

7. Device (1) according to any one of Claims 1 to 5, **characterized in that** the penetrating part (41) and the cooling part (42) of the end piece (4) are in one piece.

8. Device (1) according to any one of the preceding claims, **characterized in that** the frictional contact means (5) are integrated into the penetrating part (41) and take the form of at least one radial projection.

9. Device (1) according to any one of the preceding claims, **characterized in that** the mandrel (3) has a reflective solid surface (13) at its first end, intended to form means for reflecting light radiation from light sources of a heating unit (14).

10. Device (1) according to any one of the preceding claims, **characterized in that** the mandrel (3) has at its first end a shoulder (10) intended to form an abutment in translation of the end piece (4) on the mandrel (3).

11. Device (1) according to the preceding claim, **characterized in that** the shoulder (10) of the mandrel (3) has an annular groove (11) in which is received an annular bead (12) borne by the penetrating part (41) of the end piece (4).

12. Heating unit (14) for heating preforms (2), comprising at least one device (1) for gripping preforms according to any one of the preceding claims.
